# EUROPÄISCHE PATENTSCHRIFT

(11) **EP 2 892 784 B1**
(45) Veröffentlichungstag und Bekanntmachung des Hinweises auf die Patenterteilung: **02.10.2019**
(21) Anmeldenummer: 13739988.7
(22) Anmeldetag: 19.07.2013
(51) Int. Cl.: F21S 43/19, F21S 43/14, F21S 41/143, B60Q 3/53, B60Q 3/43, F21S 41/19, B61D 29/00

(54) **LEUCHTE FÜR FAHRZEUGE, INSBESONDERE SCHIENENFAHRZEUGE**
LUMINAIRE FOR VEHICLES, PARTICULARLY RAIL VEHICLES
APPAREIL D'ÉCLAIRAGE POUR VÉHICULES, EN PARTICULIER POUR VÉHICULES FERROVIAIRES

(30) Priorität: 06.09.2012 DE 102012017656
(43) Veröffentlichungstag der Anmeldung: 15.07.2015
(73) Patentinhaber: SBF Spezialleuchten GmbH, 04316 Leipzig (DE)
(72) Erfinder: HEILMANN, Andreas, 04316 Leipzig (DE)
(74) Vertreter: Reichert & Lindner Partnerschaft Patentanwälte
(86) Internationale Anmeldenummer: PCT/EP2013/065332
(87) Internationale Veröffentlichungsnummer: WO 2014/037140

(56) Entgegenhaltungen:
- EP-A1- 1 431 158
- DE-A1- 10 303 430
- JP-A- 2000 243 110
- US-A- 5 068 771
- US-A1- 2005 270 791
- US-A1- 2007 091 604

## Beschreibung

### GEBIET DER ERFINDUNG

Die Erfindung betrifft eine Leuchte für Fahrzeuge, insbesondere für Schienenfahrzeuge, mit wenigstens einem Lichtmodul.

### TECHNISCHER HINTERGRUND

Außenlichtanordnungen für (Schienen-)Fahrzeuge weisen typischerweise eine Außenleuchte in der Form eines Scheinwerfers bzw. Fernlichts und/oder eine Außenleuchte in Form eines Kennlichts (Signallicht oder Schlusslicht) auf. Es ist inzwischen üblich, die Außenleuchten einer solchen Außenlichtanordnung jeweils durch ein Leuchtdiodenfeld zu bilden, welches im Vergleich zu einem Halogen-Leuchtmittel eine höhere Energieeffizienz und längere Wartungsintervalle aufweist (vgl. z.B. DE 10 2009 041 430 A1).

Einige technische Anforderungen an solche Außenlichtanordnungen wie Lichtstärke, Farbort, Leuchtfläche, etc. sind in Normen geregelt (vgl. z.B. UIC 532, UIC 534). Neben diesen vorgeschriebenen Anforderungen haben die Fahrzeughersteller gewisse Freiheiten insbesondere in Bezug auf das Design der Außenlichtanordnungen. Da verschiedene Fahrzeughersteller üblicherweise unterschiedliche Designs für die Außenlichtanordnungen ihrer Fahrzeuge wählen, muss eine große Anzahl unterschiedlicher, im Allgemeinen nicht zueinander kompatibler Außenleuchten bzw. Außenlichtanordnungen entwickelt und vorgehalten werden.

Eine ähnliche Problematik existiert auch im Bereich von Innenleuchten (direkte oder indirekte Beleuchtung, Informationsleuchten, etc.) und auch bei anderen Fahrzeugen wie insbesondere Kraftfahrzeugen.

Verschiedene Fahrzeugbeleuchtungen, bei denen jeweils eine Mehrzahl einzelner in einem Raster angeordneter Lichtelemente, insbesondere LEDs zum Einsatz kommen, sind in US 2005/0270791 A1, DE 103 03 430 A1, JP 2000243110, US 2007/0091604 A1, US 5 068 771 A sowie in EP 1 431 158 A1 beschrieben.

### ZUSAMMENFASSUNG DER ERFINDUNG

Der vorliegenden Erfindung liegt deshalb die Aufgabe zugrunde, eine verbesserte Leuchte für Fahrzeuge zu schaffen, die einfach an die spezifischen Vorgaben eines Fahrzeugherstellers angepasst werden kann.

Diese Aufgabe wird gelöst durch die Lehren der unabhängigen Ansprüche. Besonders bevorzugte Ausgestaltungen und Weiterbildungen der Erfindung sind in den abhängigen Ansprüchen angegeben.

Die erfindungsgemäße Leuchte für Fahrzeuge, insbesondere für Schienenfahrzeuge, weist wenigstens ein Lichtmodul, welches ein Gehäuse und wenigstens ein Leuchtmittel in oder an dem Gehäuse aufweist, und eine Trägervorrichtung zum Halten des wenigstens einen Lichtmoduls auf. Die Trägervorrichtung weist eine Grundplatte und mehrere an der Grundplatte befestigte Modulträger auf. Dabei sind die Modulträger jeweils zum Halten eines Lichtmoduls ausgestaltet und ist das wenigstens eine Lichtmodul in oder an den Modulträgern an der Grundplatte montiert.

Durch den modularen Aufbau der erfindungsgemäßen Leuchte mit einer Trägervorrichtung und wenigstens einem Lichtmodul kann die Leuchte einfach an die spezifischen Vorgaben eines Fahrzeugherstellers angepasst werden. Der Aufbau der Trägervorrichtung aus einer Grundplatte und mehreren daran befestigten Modulträgern ermöglicht eine einfache Umsetzung dieser Modularität bzw. Anpassungsfähigkeit der Leuchte.

Darüber hinaus bietet der modulare Aufbau der erfindungsgemäßen Leuchte auch Vorteile in Bezug auf Wartung und Reparatur der Leuchte sowie ggf. bei gewünschten Variationen und Modifikationen einer Leuchte.

Der Aufbau der Trägervorrichtung aus Grundplatte und Modulträgern bietet außerdem den Vorteil, dass die Grundplatte als Kühlkörper für die Lichtmodule genutzt werden kann und/oder die Module sowie die Modulträger von einem Kühlluftstrom umströmt werden können.

Die erfindungsgemäße Leuchte ist für Fahrzeuge beliebiger Art, insbesondere jedoch für Schienenfahrzeuge (Züge, Hochgeschwindigkeitszüge, Straßenbahnen, S-Bahnen, U-Bahnen, usw.) in vorteilhafter Weise einsetzbar.

Unter einer Leuchte sind in diesem Zusammenhang sowohl Außenleuchten als auch Innenleuchten zu verstehen. Zu den Außenleuchten zählen - je nach Art und Typ des Fahrzeuges - insbesondere Schweinwerfer / Fernlichter und Kennlichter wie Signallichter, Schlusslichter, Bremslichter, Fahrtrichtungsanzeiger und dergleichen sowie kombinierte Außenleuchten (z.B. Signallicht und Schlusslicht, Fernlicht und Signallicht, Fernlicht und Signallicht und Schlusslicht). Zu den Innenleuchten zählen in diesem Zusammenhang insbesondere direkte Beleuchtungen, indirekte Beleuchtungen, Informationsanzeigen, Hinweistafeln, Leseleuchten, Fluchtweganzeigen und dergleichen.

Der Begriff Lichtmodul soll in diesem Zusammenhang eine optische und elektrische Einheit bezeichnen, die in einem gemeinsamen Gehäuse untergebracht ist. Das Lichtmodul weist wenigstens ein Leuchtmittel auf. Das Leuchtmittel ist grundsätzlich von beliebiger Art, vorzugsweise weist ein Lichtmodul ein oder mehrere Leuchtdioden (LEDs) auf, es können aber auch Halogenlampen, Xenon-Lampen oder andere Leuchtmittel eingesetzt werden. Ein Lichtmodul ist vorzugsweise mit wenigstens einer Optik (Linse, Objektiv, Reflektor, Blende, Filter, etc.) ausgestattet. Ein Lichtmodul weist vorzugsweise wenigstens eine elektrische Anschlussleitung zur Energieversorgung des Lichtmoduls auf. Die elektrische Anschlussleitung weist vorzugsweise ein, zwei, drei oder mehr Leitungsdrähte auf.

Die Lichtmodule der Leuchte können vorzugsweise direkt von einer zentralen Steuereinrichtung in der Leuchtenanordnung oder im Fahrzeug(inneren) angesteuert werden. Alternativ können die Lichtmodule auch jeweils mit einer eigenen (dezentralen) Steuervorrichtung ausgestattet sein, welche den Betrieb des Lichtmoduls steuert und über die Anschlussleitung mit der zentralen Steuereinrichtung in der Leuchtenanordnung oder im Fahrzeug(inneren) gekoppelt ist. Über die elektrische Anschlussleitung können in diesen Fällen vorzugsweise auch Daten- und Steuersignale übertragen werden. In einer anderen Ausführungsform der Erfindung können die Daten- und Steuersignale auch drahtlos (z.B. per Funk) übertragen werden.

In einer bevorzugten Ausgestaltung der Erfindung weist jedes Lichtmodul zudem eine eigene Überwachungseinrichtung zum Überwachen des Betriebszustandes (ein/aus, Lichtstärke, Fehler, etc.) des Lichtmoduls auf. Diese Überwachungseinrichtung ist vorzugsweise mit der zentralen Steuereinrichtung der Leuchte oder der dezentralen Steuervorrichtung des Lichtmoduls verbunden. In einer alternativen Ausgestaltung der Erfindung kann die Leuchte auch eine Steuereinrichtung und/oder eine Überwachungseinrichtung für alle Lichtmodule der Leuchte gemeinsam aufweisen.

Die Lichtmodule der Leuchte sind vorzugsweise in mechanischer Hinsicht (z.B. Form, Größe, etc.), optischer Hinsicht (z.B. Leuchtfläche, Abstrahlwinkel, etc.) und/oder steuerungstechnischer Hinsicht (z.B. Anschlussleitungen) einheitlich ausgebildet. In Bezug auf ihre Lichtfarben, Lichtstärken, etc. können wahlweise einheitliche oder unterschiedliche Lichtmodule verwendet werden. Die Einheitlichkeit der Lichtmodule kann vorzugsweise auch nur innerhalb von Teilgruppen der Lichtmodule gelten, mit anderen Worten kann es ein, zwei oder mehr Arten / Unterarten / Typen von Lichtmodulen zum Aufbau einer Leuchte geben.

Weiter haben die Lichtmodule, insbesondere die Lichtmodule einer Teilgruppe vorzugsweise jeweils den gleichen Farbort und/oder den gleichen Abstrahlwinkel, den die jeweilige Leuchte haben soll. In anderen Ausführungsformen sind auch kombinierte Leuchten (z.B. Scheinwerfer und Kennlicht oder Signallicht und Schlusslicht gemeinsam in einer Außenleuchte) möglich, bei denen zum Beispiel Lichtmodule für die eine Art des Außenlichts und Lichtmodule für die andere Art des Außenlichts an der Trägervorrichtung montiert werden oder Lichtmodule, die zwischen zwei Betriebsarten entsprechend den zwei Arten der Außenleuchten umgeschaltet werden können, an der Trägervorrichtung montiert werden.

Des Weiteren können die Lichtmodule vorzugsweise in (wenigstens) zwei Betriebsarten betrieben werden, beispielsweise ungedimmt und gedimmt. Auf diese Weise können beispielsweise das Fernlicht und das Signallicht jeweils auch als Abblendlicht mit reduzierter Lichtstärke betrieben werden.

In einer bevorzugten Ausgestaltung der Erfindung sind die Lichtmodule der Leuchte jeweils als autarke Lichtmodule ausgestaltet. Die Lichtmodule sind autark, d.h. unabhängig voneinander ansteuerbar und betreibbar. Dies hat den Vorteil, dass die Lichtmodule einer Leuchte einzeln oder in Teilgruppen ein- und ausgeschaltet bzw. angesteuert werden können. Es können so zum Beispiel für eine Leuchte unterschiedliche Helligkeitsstufen und/oder unterschiedliche Lichtkegel für verschiedene Betriebsarten (z.B. Fernlicht / Abblendlicht) eingestellt werden.

Vorzugsweise weist zumindest ein Teil der mehreren Lichtmodule der Leuchte eine im Wesentlichen kreisförmige, hexagonale oder oktagonale Leuchtfläche auf. Vorzugsweise weisen alle Lichtmodule der Leuchte eine im Wesentlichen kreisförmige, hexagonale oder oktagonale Leuchtfläche auf. Mit der kreisförmigen, hexagonalen oder oktagonalen Leuchtfläche der einzelnen Lichtmodule lassen sich relativ geschlossene Leuchtflächen für die gesamte Leuchte bilden. Außerdem lassen sich mit der kreisförmigen, hexagonalen oder oktagonalen Leuchtfläche der einzelnen Lichtmodule nahezu beliebige Ausgestaltungen der Leuchte bilden. Neben den Lichtmodulen mit kreisförmiger, hexagonaler oder oktagonaler Leuchtfläche existieren vorzugsweise weitere Lichtmodule mit anders ausgestalteten Leuchtflächen, die am Rand der Leuchte montiert werden und deshalb beispielsweise halbkreisförmige, viertelkreisförmige, halb-hexagonale oder halb-oktagonale Leuchtflächen aufweisen. Grundsätzlich sind im Rahmen der Erfindung auch Lichtmodule mit anders ausgestalteten Leuchtflächen (z. B. dreieckig, quadratisch, oval, usw.) einsetzbar.

Unter einem Gehäuse des Lichtmoduls wird jede Art einer technischen Konstruktion verstanden, die geeignet ist, die elektrischen und optischen Komponenten des Lichtmoduls in einer vorbestimmten absoluten und/oder gegenseitigen Positionierung zu halten. Es können insbesondere sowohl im Wesentlichen geschlossene Gehäuse (z.B. Zylinderformen, etc.) als auch offene Gehäuse (z.B. Rahmenkonstruktionen, etc.) verwendet werden.

Die Trägervorrichtung weist eine Grundplatte auf. Diese Grundplatte hat eine Plattenform in einer oder in mehreren im Wesentlichen parallelen oder zueinander winklig angestellten Ebenen. Bei einer Grundplatte mit mehreren Ebenen lassen sich spezielle dreidimensionale Ausgestaltungen der Leuchten realisieren, bei denen die Lichtmodule beispielsweise terrassenartig angeordnet sind. Im Ergebnis können so weitere Design-Varianten von Leuchten realisiert werden. Die Grundplatte ist vorzugsweise im Wesentlichen formstabil (bezogen auf die üblichen Einsatzbedingungen im jeweiligen Fahrzeug). Die Grundplatte ist vorzugsweise aus einem Kunststoffmaterial, einem metallischen Material oder einem Verbundwerkstoff gefertigt.

Die Trägervorrichtung weist mehrere an der Grundplatte befestigte Modulträger auf. Die Modulträger sind an der Grundplatte vorzugsweise dauerhaft befestigt (z.B. durch Verschweißen, Verlöten, Verkleben, Vernieten, Verpressen, etc.) oder lösbar angebracht (z.B. durch Steckverbindung, Klemmverbindung, Verschrauben, etc.). Die Modulträger sind auf der Grundplatte vorzugsweise gleichmäßig, ungleichmäßig oder zufällig verteilt.

Die Modulträger sind jeweils zum Halten eines Lichtmoduls ausgebildet. In diesem Zusammenhang sind die Modulträger insbesondere ausgestaltet, um ein Lichtmodul dauerhaft (z.B. durch Verschweißen, Verlöten, Verkleben, Vernieten, Verpressen, etc.) oder lösbar (z.B. durch Steckverbindung, Klemmverbindung, Verschrauben, etc.) in oder an einem Modulträger zu montieren. Die Modulträger sind vorzugsweise formstabil ausgebildet. Die Modulträger sind vorzugsweise aus einem Kunststoffmaterial oder einem metallischen Material gefertigt. Die Modulträger sind vorzugsweise im Wesentlichen aus dem gleichen Material wie die Grundplatte gefertigt. Das Lichtmodul ist vorzugsweise in einer vorbestimmten Position in oder an einem Modulträger montierbar. Das Lichtmodul ist vorzugsweise in einer vorbestimmten Ausrichtung in oder an einem Modulträger montierbar, kann in speziellen Ausgestaltungen der Erfindung aber auch zum Beispiel schwenkbar in oder an einem Modulträger montierbar sein. Das Lichtmodul ist vorzugsweise in einem Modulträger so montierbar, dass es im Wesentlichen vollständig darin aufgenommen ist oder allenfalls geringfügig aus diesem heraus steht.

Das wenigstens eine Lichtmodul ist gemäß der Erfindung variabel in oder an den Modulträgern montierbar. Hierunter soll in diesem Zusammenhang verstanden werden, dass bei einer bereitgestellten Grundplatte mit einer bereitgestellten Anzahl und Anordnung von Modulträgern daran das/die Lichtmodul(e) wahlweise in oder an beliebigen Modulträgern montiert werden kann/können. Insbesondere können in diesem Zusammenhang alle zur Verfügung stehenden Modulträger jeweils mit einem Lichtmodul bestückt werden oder es kann nur eine vorbestimmte Auswahl der zur Verfügung stehenden Modulträger jeweils mit einem Lichtmodul bestückt werden.

In einer bevorzugten Ausgestaltung der Erfindung können Anzahl und/oder Anordnung der Lichtmodule variabel an die Ausgestaltung der Leuchte angepasst werden, Anzahl und/oder Anordnung der Modulträger variabel an die Ausgestaltung der Leuchte angepasst werden und/oder Form und/oder Größe der Grundplatte variabel an die Ausgestaltung der Leuchte angepasst werden.

Unter der Ausgestaltung der Leuchte sollen in diesem Zusammenhang insbesondere deren Art, Form und Größe verstanden werden. Die Ausgestaltung der Leuchte hängt dabei insbesondere auch von dem vom Fahrzeughersteller gewünschten Design und dem zur Verfügung stehenden Bauraum ab

In einer bevorzugten Ausgestaltung der Erfindung weisen die Modulträger jeweils eine stirnseitige Aussparung zum Einsetzen eines Lichtmoduls in ihrem der Grundplatte abgewandten Endbereich auf. Diese Maßnahme ermöglicht ein einfaches Montieren der Lichtmodule in oder an den auf der Grundplatte befestigten Modulträgern.

In einer weiteren bevorzugten Ausgestaltung der Erfindung weisen die Modulträger jeweils einen Profilkörper auf. Dieser Profilkörper des Modulträgers ist vorzugsweise ein von einem Profilelement gebildeter Profilkörper. Besonders bevorzugt weist der Profilkörper des Modulträgers wenigstens zwei Profilleisten auf, welche im Winkel zueinander angeordnet sind. Diese Maßnahmen ermöglichen einen besonders einfachen Aufbau der Modulträger. Diese Maßnahmen ermöglichen auch ein einfaches Führen der elektrischen Anschlussleitung des Lichtmoduls aus dem Modulträger heraus.

Der Begriff Profilkörper soll in diesem Zusammenhang einen Körper mit einem beliebigen Querschnittsprofil bezeichnen. Das Querschnittsprofil des Profilkörpers ist vorzugsweise über seine Länge bzw. Höhe hinweg gleichmäßig bzw. konstant, kann aber auch veränderlich ausgestaltet sein.

Die Ausgestaltung des Profilkörpers des Modulträgers ist aus zwei Profilelementen zusammengesetzt. Eine Profilleiste bezeichnet in diesem Zusammenhang insbesondere ein im Wesentlichen plattenförmiges Element mit einer vorzugsweise im Wesentlichen rechteckigen Grundform (ggf. mit Ausschnitten, Aussparungen, Nuten und dergleichen versehen). Die Profilleisten sind in einem Winkel zueinander angeordnet. Je nach Anzahl der Profilleisten beträgt dieser Winkel vorzugsweise etwa 120°, etwa 90°, etwa 72° oder etwa 60°. Die mehreren Profilleisten sind vorzugsweise gleichmäßig zueinander verteilt angeordnet und ausgerichtet. Die zwei Profilleisten sind vorzugsweise fest miteinander verbunden, wahlweise dauerhaft (z.B. durch Verschweißen, Verlöten, Verkleben, Vernieten, Verpressen, etc.) oder lösbar (z.B. durch Steckverbindung, Klemmverbindung, Verschrauben, etc.).

In einer weiteren bevorzugten Ausgestaltung der Erfindung weist die Grundplatte mehrere Aussparungen oder Durchbrechungen zum Montieren jeweils eines Modulträgers auf. Die Aussparungen oder Durchbrechungen in der Grundplatte ermöglichen eine stabilere Befestigung der Modulträger an der Grundplatte. Zudem erleichtern die Aussparungen oder Durchbrechungen in der Grundplatte eine einfachere Positionierung der Modulträger an vorgegebenen Positionen.

In einer noch weiteren bevorzugten Ausgestaltung der Erfindung weist die Grundplatte mehrere Durchbrechungen zum Hindurchführen von elektrischen Anschlussleitungen wenigstens eines Lichtmoduls auf. Diese Durchbrechungen in der Grundplatte sind vorzugsweise so dimensioniert und angeordnet, dass durch sie hindurch die elektrischen Anschlussleitung eines Lichtmoduls oder die elektrischen Anschlussleitungen von zwei, drei, vier oder mehr insbesondere benachbarten Lichtmodulen zur Rückseite der Grundplatte geführt werden können.

Gegenstand der Erfindung soll weiter auch ein Fahrzeug, insbesondere ein Schienenfahrzeug, mit wenigstens einer oben beschriebenen Leuchte der Erfindung sein. Die Leuchte kann dabei wahlweise eine Außenleuchte oder eine Innenleuchte sein.

Das erfindungsgemäße Verfahren zum Herstellen einer Leuchte für Fahrzeuge, insbesondere für Schienenfahrzeuge, enthält die Schritte: des Anspruchs 10.

Dieses Verfahren ermöglicht die Herstellung einer oben beschriebenen Leuchte der Erfindung.

Bezüglich der Vorteile, Begriffsdefinitionen und bevorzugten Ausgestaltungen des Verfahrens wird zur Vermeidung von Wiederholungen an dieser Stelle auf die obigen Ausführungen in Zusammenhang mit der erfindungsgemäßen Leuchte verwiesen.

### KURZBESCHREIBUNG DER ZEICHNUNGEN

Obige sowie weitere Merkmale und Vorteile der Erfindung werden aus der nachfolgenden Beschreibung bevorzugter, nicht-einschränkender Ausführungsbeispiele unter Bezug auf die beiliegenden Zeichnungen besser verständlich. Darin zeigen, größtenteils schematisch:
- Fig. 1: eine Darstellung des Aufbaus einer Außenlichtanordnung mit zwei Leuchten gemäß der vorliegenden Erfindung;
- Fig. 2: eine Perspektivansicht einer Leuchte gemäß einem bevorzugten Ausführungsbeispiel der vorliegenden Erfindung;
- Fig. 3A: eine Teildraufsicht der Leuchte von Fig. 2;
- Fig. 3B: eine Schnittansicht der Leuchte von Fig. 2 gemäß Linie B-B in Fig. 3A;
- Fig. 3C: eine Schnittansicht der Leuchte von Fig. 2 gemäß Linie C-C in Fig. 3A;
- Fig. 4A: eine Teildraufsicht der Leuchte von Fig. 2, ohne Lichtmodul;
- Fig. 4B: eine Schnittansicht der Leuchte von Fig. 2 gemäß Linie B-B in Fig. 4A;
- Fig. 4C: eine Schnittansicht der Leuchte von Fig. 2 gemäß Linie C-C in Fig. 4A;
- Fig. 4D: Seitenansichten der beiden Profilleisten des Modulträgers der Leuchte von Fig. 3A bis 4C;
- Fig. 5: eine Schnittansicht der Leuchte von Fig. 2 analog der Ansicht von Fig. 4C gemäß einem weiteren Ausführungsbeispiel der Erfindung; und
- Fig. 6: eine Schnittansicht der Leuchte von Fig. 2 analog der Ansicht von Fig. 3C gemäß einem weiteren Ausführungsbeispiel der Erfindung.

### DETAILLIERTE BESCHREIBUNG BEVORZUGTER AUSFÜHRUNGSBEISPIELE

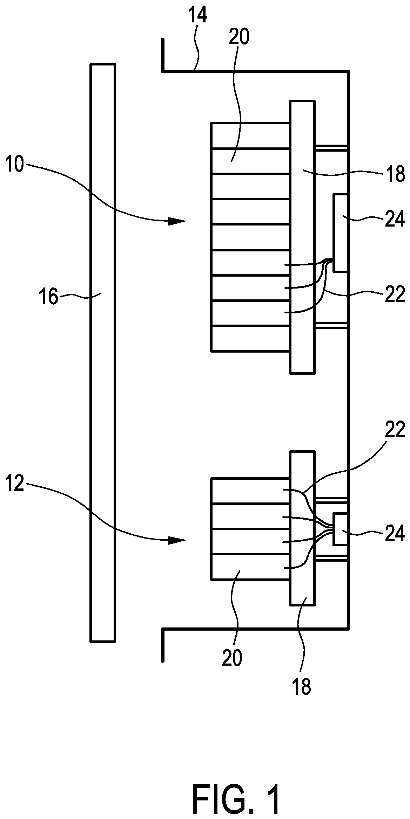

Fig. 1 zeigt beispielhaft den Grundaufbau einer Außenlichtanordnung mit zwei Leuchten gemäß der Erfindung am Beispiel eines Schienenfahrzeuges.

Die Außenlichtanordnung enthält in diesem Ausführungsbeispiel zwei Außenleuchten: einen Schweinwerfer als erste Leuchte 10 und ein Kennlicht (z.B. weißes Signallicht oder rotes Schlusslicht) als zweite Leuchte 12. Die beiden Leuchten 10, 12 sind in einem Leuchtengehäuse 14 hinter einer Leuchtenabdeckung 16 angeordnet, welche zumindest teilweise transparent ausgestaltet und vorzugsweise lösbar angebracht ist. Es ist natürlich auch möglich, die erste Leuchte 10 als Kennlicht und die zweite Leuchte 12 als Scheinwerfer auszubilden oder eine Außenlichtanordnung mit nur einer Leuchte (Scheinwerfer oder Kennlicht) vorzusehen.

Die beiden Leuchten 10, 12 weisen jeweils eine Trägervorrichtung 18 und mehrere Lichtmodule 20 auf. Die Trägervorrichtung 18 ist an dem Leuchtengehäuse 14 angebracht, bevorzugt lösbar daran befestigt. Die Lichtmodule 20 weisen jeweils eine elektrische Anschlussleitung 22 auf, mittels der sie mit einer Steuereinrichtung 24 hinter der Trägervorrichtung 18 verbunden sind und über die sie mit elektrischer Energie versorgt werden können.

Die Trägervorrichtungen 18 der beiden Leuchten 10, 12 können wahlweise als separate Trägervorrichtungen oder als eine gemeinsame Trägervorrichtung ausgebildet sein. Die beiden Trägervorrichtungen 18 haben jeweils eine Grundgeometrie, die dem gewünschten Design der jeweiligen Außenleuchte 10, 12 im Wesentlichen entspricht.

Die Außenleuchten 10, 12 bzw. deren Lichtmodule 20 werden über die Bordspannung des Schienenfahrzeuges mit Energie versorgt.

Die Lichtmodule 20 der beiden Leuchten 10, 12 sind jeweils als elektrisch, optisch und thermisch autarke Einheit ausgebildet. Sie weisen jeweils ein oder mehrere Leuchtmittel in Form von Leuchtdioden auf. Sie haben außerdem eine einheitliche zylindrische Gestaltung (Form und Größe) und weisen einheitliche Anschlussleitungen 22 und einheitliche (z.B. kreisförmige oder oktagonale) Leuchtflächen auf.

Neben dem Leuchtmittel (Leuchtdiode) weisen die Lichtmodule 20 zudem jeweils eine Optik und ein Gehäuse (z.B. Spritzguss- oder Strangpressprofil, Zylinderform, Rahmenkonstruktion, etc.) auf. Das Modulgehäuse bietet einen Staub- und Feuchtigkeitsschutz für die elektrischen Komponenten des Lichtmoduls 20.

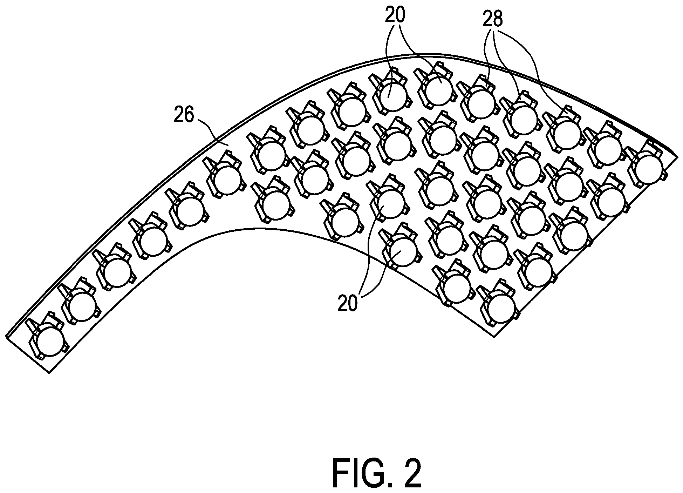

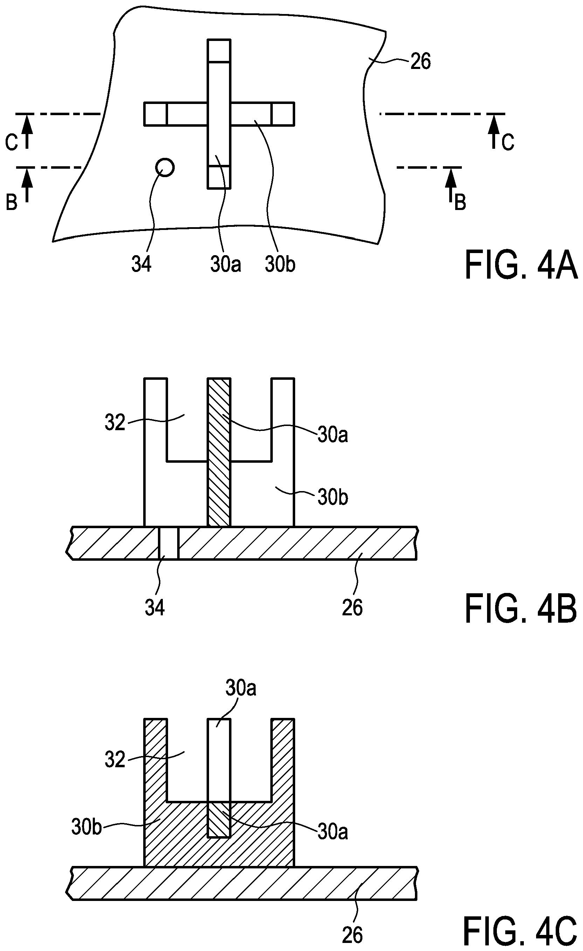

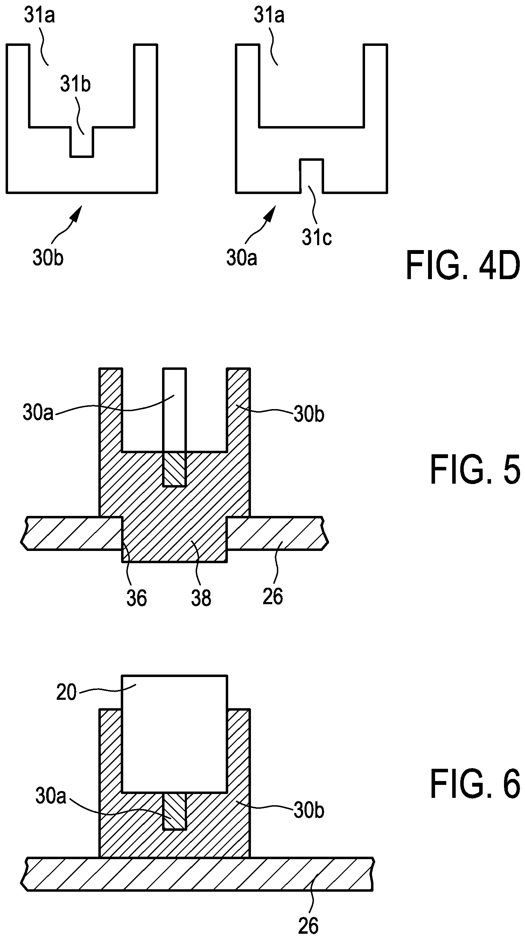

Nachfolgend werden anhand der Fig. 2 bis 6 verschiedene Ausführungsformen der erfindungsgemäßen Leuchte 10, 12 und insbesondere ihrer Trägervorrichtung 18 näher beschrieben. Dabei zeigen die Fig. 2, 3 und 6 die Trägervorrichtung 18 jeweils mit eingesetzten Lichtmodulen 20, während die Fig. 4 und 5 die Trägervorrichtung 18 jeweils ohne Lichtmodule 20 zeigen.

Wie in Fig. 2 veranschaulicht, ist die Trägervorrichtung 18 für die Lichtmodule 20 im Wesentlichen aus einer Grundplatte 26 aufgebaut, an der mehrere Modulträger 28 zum Halten jeweils eines Lichtmoduls 20 befestigt sind.

Die Grundplatte 26 der Trägervorrichtung 18 ist ein im Wesentlichen plattenförmiger, ebener Körper, dessen Grundform an das gewünschte Design der jeweiligen Leuchte 10, 12 angepasst werden kann. Die Grundplatte 26 ist zum Beispiel aus einem Kunststoffmaterial oder einem metallischen Material gefertigt.

An der Grundplatte 26 ist eine Vielzahl von Modulträgern 28 befestigt. Diese Modulträger 28 sind vorzugsweise gleichmäßig über die Grundplatte 26 verteilt, können aber auch ungleichmäßig oder zufällig verteilt angeordnet werden.

Jeder Modulträger 28 kann ein Lichtmodul 20 halten. Dabei können die Lichtmodul 20 je nach Art, Anwendungszweck und Design der jeweiligen Leuchte 10, 12 variabel in oder an den Modulträgern 28 montiert werden. D.h. es können zum Beispiel alle Modulträger 28 der Trägervorrichtung 18 jeweils mit einem Lichtmodul 20 bestückt werden, wie in Fig. 2 dargestellt, oder es kann auch nur eine vorbestimmte Auswahl der mehreren Modulträger 28 jeweils mit einem Lichtmodul 20 bestückt werden.

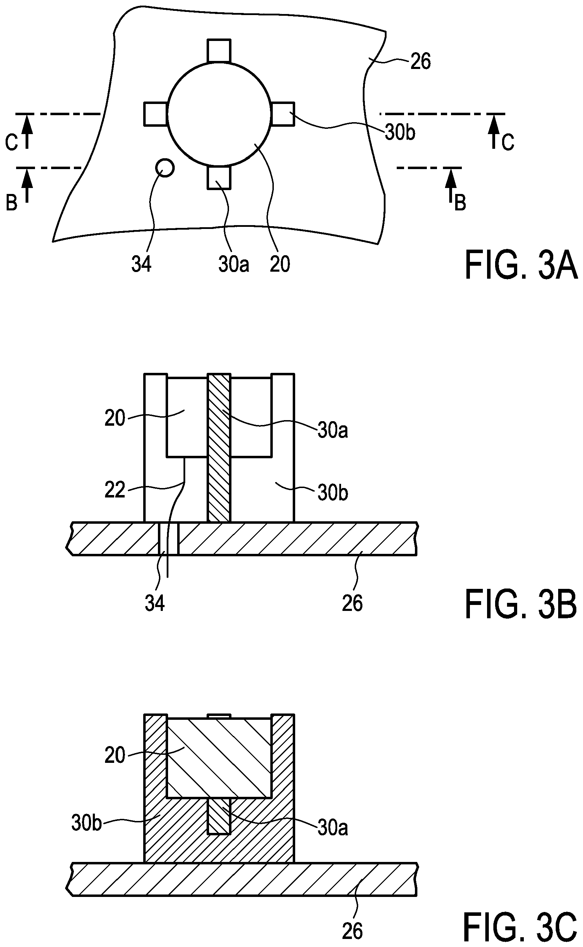

Verschiedene Ausführungsformen der Modulträger 28 der Trägervorrichtung 18 werden nun anhand der Fig. 3 bis 6 näher erläutert.

In dem Ausführungsbeispiel von Fig. 3 und 4 ist ein Modulträger 28 jeweils aus zwei Profilleisten 30a und 30b aufgebaut. Wie in Fig. 4D veranschaulicht, sind diese beiden Profilleisten 30a, 30b jeweils als ein plattenförmiges Element mit einer im Wesentlichen rechteckigen Grundform ausgebildet. In diese rechteckige Grundform der Profilleisten 30a, 30b ist jeweils ein Ausschnitt 31a eingebracht, welcher im zusammengesetzten Zustand der Profilleisten 30a, 30b eine stirnseitige Aussparung 32 des Modulträgers 28 für ein Lichtmodul 20 bildet. Außerdem ist in die rechteckige Grundform der Profilleisten 30a, 30b jeweils eine Nut 31b bzw. 31c eingebracht, sodass die beiden Profilleisten 30a, 30b kreuzweise zusammengesetzt werden können. Die Profilleisten 30a, 30b sind zum Beispiel aus einem Kunststoffmaterial oder einem metallischen Material gefertigt; sie können insbesondere aus dem gleichen Material wie die Grundplatte 26 der Trägervorrichtung 18 gefertigt sein.

Fig. 4A-C zeigen, wie die beiden oben beschriebenen Profilleisten 30a, 30b von Fig. 4D kreuzweise zusammengesetzt sind, sodass sie einen sternförmigen Profilkörper in der Form eines Kreuzes mit vier Strahlen bilden. Die der Grundplatte 26 zugewandten Unterkanten der Profilleisten 30a, 30b sind vorzugsweise fluchtend zueinander ausgerichtet, sodass sich eine ebene Grundfläche für den so gebildeten Profilkörper ergibt. Die beiden Profilleisten 30a, 30b können einfach zusammengesteckt werden. Zusätzlich können sie zum Beispiel eine Klemmverbindung, eine Klebeverbindung, eine Presspassung oder dergleichen erhalten, sodass ein stabiler Profilkörper für den Modulträger 28 entsteht.

Der so zusammengesetzte Profilkörper bzw. Modulträger 28 wird an einer vorbestimmten Stelle auf die Grundplatte 26 gesetzt und dort befestigt. Zur Befestigung können die Modulträger 28 beispielsweise mit der Grundplatte 26 verklebt, verschweißt oder verlötet werden.

Die beiden Ausschnitte 31a in den Profilleisten 30a, 30b bilden zusammen eine stirnseitige Aussparung 32 im Profilkörper in seinem der Grundplatte 26 abgewandten Endbereich. In diese Aussparung 32 kann dann jeweils ein Lichtmodul 20 von vorne (von der der Grundplatte abgewandten Seite her) eingesetzt werden, wie in Fig. 3A-C dargestellt.

Das Lichtmodul 20 wird fest in dem Modulträger 28, genauer in seiner stirnseitigen Aussparung 32 montiert, beispielsweise mittels Presspassung, Klemmwirkung und/oder Verkleben. Das Lichtmodul 20 wird dabei auch in einer vorbestimmten Ausrichtung in dem Modulträger 28 montiert, um einen vorbestimmten Abstrahlwinkel zu erzielen.

In diesem Ausführungsbeispiel haben die Lichtmodule 20 jeweils ein im Wesentlichen zylindrisches Gehäuse, in dem wenigstens ein Leuchtmittel (z.B. Leuchtdiode) und wenigstens eine Optik (z.B. Blende, Linse, Filter, etc.) gehalten sind. Alternativ kann als Gehäuse auch eine offene Rahmenkonstruktion verwendet werden. Außerdem muss das Gehäuse des Lichtmoduls 20 nicht notwendigerweise ein Zylinder mit einer kreisförmigen Grundfläche sein, beispielsweise können auch quadratische, rechteckige, polygonale, elliptische, etc. Grundflächen eingesetzt werden.

Das Gehäuse des Lichtmoduls 20 kann zudem mit Nuten versehen sein, welche in die die Ausschnitte 31a begrenzenden Stege der Profilleisten 30a, 30b eingreifen, sodass die Lichtmodule 20 in vorbestimmter Positionierung und Orientierung in die Modulträger 28 eingesetzt werden können. Alternativ oder zusätzlich können die Lichtmodule 20 zu diesem Zweck auch mit einer farbigen Markierung versehen sein.

Wie in Fig. 3 und 4 dargestellt, ist in der Grundplatte 26 in der Nähe eines Modulträgers 28 jeweils eine Durchbrechung 34 zum Beispiel in Form einer Bohrung vorgesehen. Durch diese Durchbrechung kann die elektrische Anschlussleitung 22 des in den Modulträger 28 eingesetzten Lichtmoduls 20 durch die Grundplatte 26 nach hinten zu einer Steuereinrichtung 24 (vgl. Fig. 1) geführt werden. Aufgrund der offenen Konstruktion des Modulträgers 28 als Profilkörper aus zwei Profilleisten 30a, 30b ist die Anschlussleitung 22 des Lichtmoduls 20 auch im montierten Zustand des Lichtmoduls 20 einfach zugänglich, ohne dass weitere Anschlussmaßnahmen getroffen werden müssten.

In einer alternativen Ausführungsform können in der Grundplatte 26 auch größere Durchbrechungen 34 in den Bereichen zum Beispiel zwischen zwei oder vier Modulträgern 28 ausgebildet sein. In diesem Fall können die elektrischen Anschlussleitungen 22 mehrerer benachbarter Lichtmodule 20 durch eine gemeinsame Durchbrechung 34 in der Grundplatte 26 zur Steuereinrichtung 24 geführt werden.

Während in dem Ausführungsbeispiel von Fig. 2 und 3 die Lichtmodule 20 jeweils vollständig innerhalb eines Modulträgers 28 der Trägervorrichtung 18 aufgenommen sind, ist es auch möglich, dass die Lichtmodule 20 mit dem Modulträger 28 bzw. seinen Profilleisten 30a, 30b stirnseitig fluchtend ausgerichtet sind oder dass die Lichtmodule 20 den Modulträger 28 bzw. seine Profilleisten 30a, 30b stirnseitig etwas überragen (vgl. Fig. 6).

In dem Ausführungsbeispiel der Fig. 3 und 4 ist der Modulträger 28 auf die Grundplatte 26 der Trägervorrichtung 18 aufgesetzt. In einer anderen Ausführungsform, die in Fig. 5 gezeigt ist, kann die Grundplatte 26 auch Durchbrechungen 36 aufweisen, in welche die Modulträger 28 eingesteckt werden können. Zu diesem Zweck weist zum Beispiel eine der beiden Profilleisten 30b an ihrem der Grundplatte 26 zugewandten Endbereich einen Fortsatz 38 auf, der in eine solche Durchbrechung 36 in der Grundplatte 36 eingesteckt werden kann.

Wie in Fig. 5 dargestellt, ist der Fortsatz 38 vorzugsweise schmaler als die übrige Profilleiste 30b ausgebildet, sodass die Positionierung des Modulträgers 28 festgelegt ist. Der Fortsatz 38 ist bevorzugt einstückig mit der Profilleiste 30b ausgebildet. Außerdem ist der Fortsatz 38 vorzugsweise nur an einer der beiden Profilleisten vorgesehen; alternativ kann er aber auch an beiden Profilleisten 30a, 30b vorgesehen sein.

Außerdem ist die Durchbrechung 36 in der Grundplatte 26 in Länge und Breite vorzugsweise entsprechend dem Fortsatz 38 der Profilleiste 30b ausgebildet. In dem Ausführungsbeispiel von Fig. 5 ragt der Fortsatz 38 der Profilleiste 30b ganz durch die Durchbrechung 36 in der Grundplatte 26 hindurch. Alternativ ist es auch möglich, den Fortsatz 38 der Profilleiste 30b kürzer auszubilden, sodass er innerhalb der Durchbrechung 36 in der Grundplatte 26 der Trägervorrichtung 18 endet. Ferner ist es auch möglich, anstelle der Durchbrechung 36 nur eine Ausnehmung in der den Modulträgern 28 zugewandten Seite der Grundplatte 26 der Trägervorrichtung 18 auszubilden, in welche die dann entsprechend kurzen Fortsätze 38 der Profilleisten 30b der Modulträger 28 eingesetzt werden können.

Selbstverständlich können die beiden Varianten der Fig. 5 und 6 auch miteinander kombiniert werden.

Während in den obigen Ausführungsbeispielen die Modulträger 28 jeweils aus einem sternförmigen Profilkörper aus zwei Profilleisten 30a, 30b gebildet sind, die in einem Winkel von etwa 90 Grad zueinander zusammengesteckt sind, sind diesbezüglich im Rahmen der Erfindung zahlreiche Varianten denkbar. Beispielsweise können auch sternförmige Profilkörper mit nur drei Strahlen oder mit fünf, sechs oder mehr Strahlen gebildet werden. Beispielsweise können die Profilkörper auch aus drei, vier oder mehr Profilleisten zusammengesetzt werden. Beispielsweise können die Profilleisten auch in einem Winkel von etwa 120 Grad oder etwa 72 Grad angeordnet werden. Beispielsweise können die Profilleisten auch auf andere Art und Weise zusammengefügt werden. Beispielsweise kann der Profilkörper auch einteilig ausgebildet sein.

Die wie oben beschrieben modular aufgebaute Leuchte 10, 12 kann auf einfache Weise an insbesondere spezifische Designvorgaben von Fahrzeugherstellern angepasst werden, ohne dass die gesamte Leuchte neu entwickelt und vorgehalten werden müsste. So können zum Beispiel die Anzahl und/oder die Anordnung der Lichtmodule 20 variabel an die Ausgestaltung der Leuchte 10, 12 angepasst werden. Alternativ oder zusätzlich können die Anzahl und/oder die Anordnung der Modulträger 28 variabel an die Ausgestaltung der Leuchte 10, 12 angepasst werden. Alternativ oder zusätzlich können die Form und/oder die Größe der Grundplatte 26 der Trägervorrichtung 18 variabel an die Ausgestaltung der Leuchte 10, 12 angepasst werden.

### BEZUGSZIFFERNLISTE

- 10: Leuchte (z.B. Scheinwerfer)
- 12: Leuchte (z.B. Kennlicht)
- 14: Leuchtengehäuse
- 16: Leuchtenabdeckung
- 18: Trägervorrichtung
- 20: Lichtmodul
- 22: elektrische Anschlussleitung
- 24: Steuereinrichtung
- 26: Grundplatte
- 28: Modulträger
- 30a: erste Profilleiste
- 30b: zweite Profilleiste
- 31a: Ausschnitt
- 31b: Nut
- 31c: Nut
- 32: stirnseitige Aussparung
- 34: Durchbrechung
- 36: Durchbrechung
- 38: Fortsatz

## Patentansprüche

1. Leuchte (10, 12) für Fahrzeuge, insbesondere Schienenfahrzeuge, mit wenigstens einem Lichtmodul (20), welches ein Gehäuse und wenigstens ein Leuchtmittel in oder an dem Gehäuse aufweist; und
einer Trägervorrichtung (18) zum Halten des wenigstens einen Lichtmoduls (20),
wobei die Trägervorrichtung (18) eine Grundplatte (26) und mehrere an der Grundplatte (26) befestigte Modulträger (28) aufweist, die Modulträger (28) jeweils zum Halten eines Lichtmoduls (20) ausgestaltet sind und das wenigstens eine Lichtmodul (20) in oder an den Modulträgern (28) an der Grundplatte (26) montiert ist;
**dadurch gekennzeichnet, dass**
die Modulträger (28) jeweils einen Profilkörper aufweisen, der aus zwei zusammengesteckten Profilleisten (30a, 30b) besteht, in die jeweils eine Nut (31b, 31c) eingebracht ist, so dass die beiden Profilleisten (30a, 30b) kreuzweise zusammensteckbar sind, und wobei die Profilleisten (30a, 30b) einen Profilkörper mit vier Strahlen in Form eines Kreuzes bilden.

2. Leuchte nach Anspruch 1,
**dadurch gekennzeichnet, dass**
die Anzahl und/oder Anordnung der Lichtmodule (20) an die Ausgestaltung der Leuchte (10, 12) anpassbar sind.

3. Leuchte nach einem der vorhergehenden Ansprüche,
**dadurch gekennzeichnet, dass**
die Anzahl und/oder Anordnung der Modulträger (28) an die Ausgestaltung der Leuchte (10, 12) anpassbar sind.

4. Leuchte nach einem der vorhergehenden Ansprüche,
**dadurch gekennzeichnet, dass**
die Form und/oder Größe der Grundplatte (26) an die Ausgestaltung der Leuchte (10, 12) anpassbar sind.

5. Leuchte nach einem der vorhergehenden Ansprüche ,
**dadurch gekennzeichnet, dass**
die wenigstens zwei Profilleisten (30a, 30b) in einem Winkel zueinander angeordnet sind.

6. Leuchte nach Anspruch 5,
**dadurch gekennzeichnet, dass**
die Profilleisten (30a, 30b) gleichmäßig zueinander verteilt angeordnet und ausgerichtet sind.

7. Leuchte nach Anspruch 1,
**dadurch gekennzeichnet, dass**
in die Profilleisten (30a, 30b) jeweils ein Ausschnitt (31a) eingebracht ist, welcher im zusammengesetzten Zustand der beiden Profilleisten (30a, 30b) eine stirnseitige Aussparung (32) des Modulträgers (28) für ein Lichtmodul (20) bildet.

8. Leuchte nach einem der vorhergehenden Ansprüche,
**dadurch gekennzeichnet, dass**
die Grundplatte (26) mehrere Aussparungen oder Durchbrechungen (36) zum Montieren jeweils eines Modulträgers (28) aufweist.

9. Fahrzeug, insbesondere Schienenfahrzeug, mit wenigstens einer Leuchte (10, 12) nach einem der Ansprüche 1 bis 8.

10. Verfahren zum Herstellen einer Leuchte (10, 12) für Fahrzeuge, insbesondere Schienenfahrzeuge, mit den Schritten:
Bereitstellen einer an die Ausgestaltung der Leuchte (10, 12) angepassten Grundplatte (26);
Herstellen mehrere Modulträger (28) durch Zusammenstecken von zwei Profilleisten (30a, 30b) in die jeweils eine Nut (31b, 31c) eingebracht ist, so dass die beiden Profilleisten (30a, 30b) kreuzweise zusammengesteckt werden, und wobei jeweils ein Profilkörper aus den Profilleisten (30a, 30b) mit vier Strahlen in Form eines Kreuzes gebildet wird;
Befestigen mehrerer Modulträger (28), welche jeweils zum Halten eines Lichtmoduls (20) ausgestaltet sind, an der Grundplatte (26); und
Montieren wenigstens eines Lichtmoduls (20), welches ein Gehäuse und wenigstens ein Leuchtmittel in oder an dem Gehäuse aufweist, in oder an jeweils einem Modulträger (28) einer an die Ausgestaltung der Leuchte (10, 12) angepassten Auswahl der mehreren Modulträger (28).

## Claims

1. A lamp (10, 12) for vehicles, in particular railway vehicles, having at least one light module (20), which has a housing and at least one light source in or on the housing, and a support device (18) for holding the at least one light module (20),
wherein the support device (18) has a base plate (26) and a plurality of module carriers (28) affixed to the base plate (26), the module carriers (28) each being configured for holding a light module (20) and the at least one light module (20) being mounted in or on the module carriers (28) on the base plate (26),
**characterized in that**
the module carriers (28) each have a profile body, which consists of two joined profile strips (30a, 30b), in each of which a notch (31b, 31c) is formed such that the two profile strips (30a, 30b) can be joined together in a crosswise manner, and wherein the profile strips (30a, 30b) form a profile body with four beams in the shape of a cross.

2. The lamp according to claim 1, wherein the number and/or arrangement of the light modules (20) can be adapted to the configuration of the lamp (10, 12).

3. The lamp according to any one of the preceding claims, wherein the number and/or arrangement of the module carriers (28) can be adapted to the configuration of the lamp (10, 12).

4. The lamp according to any one of the preceding claims, wherein the shape and/or size of the base plate (26) can be adapted to the configuration of the lamp (10, 12).

5. The lamp according to any one of the preceding claims, wherein the at least two profile strips (30a, 30b) are arranged at an angle to one another.

6. The lamp according to claim 5, wherein the profile strips (30a, 30b) are arranged and oriented in such a way that they are uniformly distributed in relation to one another.

7. The lamp according to claim 1, wherein a cutout (31a) is inserted in each of the profile strips (30a, 30b), which in the assembled state of the two profile strips (30a, 30b) forms a frontal recess (32) of the module carrier (28) for a light module (20).

8. The lamp according to any one of the preceding claims, wherein the base plate (26) has a plurality of recesses or apertures (36) for mounting one module carrier (28) in each case.

9. A vehicle, in particular a railway vehicle, having at least one lamp (10, 12) according to any one of claims 1 to 8.

10. A method for producing a lamp (10, 12) for vehicles, in particular railway vehicles, having the steps:
providing a base plate (26) adapted to the configuration of the lamp (10, 12);
producing a plurality of module carriers (28) by joining together two profile strips (30a, 30b), in each of which a notch (31b, 31c) is inserted such that the two profile strips (30a, 30b) can be joined together crosswise, and wherein in each case a profile body with four beams in the shape of a cross is formed from the profile strips (30a, 30b);
affixing a plurality of module carriers (28), which are each configured for holding a light module (20), to the base plate (26); and
mounting at least one light module (20), which has a housing and at least one light source in or on the housing, in or on one module carrier (28) in each case of a selection of the plurality of module carriers (28) adapted to the configuration of the lamp (10, 12).

## Revendications

1. Appareil d'éclairage (10, 12) pour véhicules, en particulier pour véhicules ferroviaires, comportant au moins un module d'éclairage (20) qui présente un boîtier et au moins un moyen d'éclairage dans ou sur le boîtier, et un dispositif porteur (18) pour maintenir l'au moins un module (20) d'éclairage (20),
le dispositif de support (18) ayant une plaque de base (26) et une pluralité de supports de module (28) fixés à la plaque de base (26), les supports de module (28) étant chacun conçus pour supporter un module d'éclairage (20), et l'au moins un module d'éclairage (20) étant monté sur ou dans les supports de module (28) sur la plaque de base (26),
**caractérisé en ce que**
les supports de modules (28) présentent chacun un corps profilé constitué de deux bandes profilées (30a, 30b) qui sont enfichées ensemble et dans chacune desquelles une rainure (31b, 31c) est introduite, de sorte que les deux bandes profilées (30a, 30b) peuvent être enfichées en croix, et les bandes profilées (30a, 30b) formant un corps profilé avec quatre faisceaux en forme d'une croix.

2. Luminaire selon la revendication 1, dans lequel le nombre et/ou la disposition des modules d'éclairage (20) peuvent être adaptés à la configuration du luminaire (10, 12).

3. Luminaire selon l'une des revendications précédentes, dans lequel le nombre et/ou la disposition des supports de modules (28) peuvent être adaptés à la configuration du luminaire (10, 12).

4. Luminaire selon l'une des revendications précédentes, dans lequel la forme et/ou la taille de la plaque de base (26) peuvent être adaptées à la configuration du luminaire (10, 12).

5. Luminaire selon l'une des revendications précédentes, dans lequel les au moins deux bandes profilées (30a, 30b) sont disposées en biais l'une par rapport à l'autre.

6. Luminaire selon la revendication 5, dans lequel les bandes profilées (30a, 30b) sont disposées et alignées uniformément les unes par rapport aux autres.

7. Luminaire selon la revendication 1, dans lequel une découpe (31a) est introduite dans les bandes profilées (30a, 30b) qui, à l'état monté des deux bandes profilées (30a, 30b), forme un évidement (32) sur la face frontale du support de module (28) pour un module léger (20).

8. Luminaire selon l'une des revendications précédentes, dans lequel la plaque de base (26) présente une pluralité d'évidements ou d'ouvertures (36) pour le montage d'un support de module (28) dans chaque cas.

9. Véhicule, en particulier véhicule ferroviaire, comportant au moins un luminaire (10, 12) selon l'une des revendications 1 à 8.

10. Procédé de fabrication d'un luminaire (10, 12) pour véhicules, en particulier pour véhicules ferroviaires, comprenant les étapes suivantes:
prévoir une plaque de base (26) adaptée à la configuration du luminaire (10, 12);
fabrication d'une pluralité de supports de modules (28) par enfichage de deux bandes profilées (30a, 30b), dans chacune desquelles est introduite une rainure (31b, 31c), de sorte que les deux bandes profilées (30a, 30b) sont enfichées en croix, et un corps profilé est formé à partir des bandes profilées (30a, 30b) avec quatre faisceaux en forme de croix;
la fixation d'une pluralité de supports de module (28), qui sont chacun conçus pour recevoir un module d'éclairage (20), sur la plaque de base (26) et
montage d'au moins un module d'éclairage (20), qui présente un boîtier et au moins un moyen d'éclairage dans ou sur le boîtier, dans ou sur un support de module (28) d'une sélection de la pluralité de supports de module (28) adaptés à la configuration du luminaire (10, 12).
